# EUROPEAN PATENT APPLICATION

(11) **EP 4 668 591 A1**
(43) Date of publication of application: **24.12.2025**
(21) Application number: 25182494.2
(22) Date of filing: 12.06.2025
(51) Int. Cl.: H04B 1/7163, H04L 1/00, H04L 1/12

(54) **SYSTEM AND METHOD OF SUPPLEMENTING CONTROL PHASE IN RANGING COMMUNICATIONS WITH REPORT AND ASSIST PORTIONS**

(30) Priority: 20.06.2024 IN 202441047369
(71) Applicant: NXP USA, Inc., Austin, TX 78735 (US)
(72) Inventor: AHIRWAR, Vijay, 5656AG Eindhoven (NL); KHUDE, Nilesh Nilkanth, 5656AG Eindhoven (NL); SRIVASTAVA, Rishabh, 5656AG Eindhoven (NL); SRINIVASA, Sudhir, 5656AG Eindhoven (NL); PIRHONEN, Riku Petteri, 5656AG Eindhoven (NL)
(74) Representative: Hardingham, Christopher Mark

(57) **Abstract**

A wireless device including a ranging radio and a communication radio. The ranging radio performs ranging operations for determining a relative distance measurement during a ranging phase of each of successive ranging cycles. The communication radio transmits a control packet with a payload during a control phase of a current ranging cycle, in which the payload includes multiple non-correlative assist symbols. When the report phase of the immediately prior ranging cycle is unsuccessful, the payload includes a report indicating a relative time measurement of an immediately prior ranging cycle combined with the assist symbols. The report is segmented into multiple report fragments interlaced with the assist symbols. The assist symbols are selected in a pseudo-random manner to improve a spectrum of the control packet when transmitted. The ranging radio is an ultra-wide band (UWB) radio and the communication radio is a narrowband (NB) radio.

## Description

### Field

The present disclosure relates in ranging communications, and more particularly to a system and method of supplementing the control phase in ranging communications with report and assist portions.

### Description Of The Related Art

Ranging communication operations are performed to determine the relative distance between two devices and which may also include exchanging location information. Typical NBA-UWB MMS (Narrowband-Assisted Multi-Millisecond Ultra-Wide Band) ranging applications include a narrowband (NB) radio to facilitate synchronization and communications for exchanging information and an ultra-wide band (UWB) radio to facilitate precise ranging operations. The deployment of NB technologies, such as 802.15.4ab, along with other bands or other communication technologies, including BLE (low-energy Bluetooth) and cellular and the like, is a challenge in the 5 gigahertz (GHz) and 6 GHz frequency bands because of signal fading and coexistence with incumbent Wi-Fi technology. The challenge includes how to resolve failures in communication of ranging report packets which is impacted by fading or coexisting interferers. The errors can include either clear channel assessment (CCA) failure or packet errors.

A typical NBA-UWB MMS ranging cycle consist of 3 phases, including a control phase, a ranging phase, and a report phase. The control phase is typically performed using the NB radio, but corresponding functions may also be performed by the UWB radio. The ranging phase is typically performed using the UWB radio. The report phase is performed using the NB radio, UWB radio, or other out-of-band (OOB) radio technology. Examples of OOB radio technology include BLE, Wi-Fi, cellular (5G or similar), etc. It is noted that although NB may generally include BLE, NB as used herein refers to 802.15.4 type radios in which BLE is considered OOB. The 802.15.4ab draft standard even suggests deferring and retrying the transmission of report packets using OOB radio technology other than NB. Such deferment, however, would require the addition of the OOB radio technology (if not already provided) with corresponding additional PHY support at significant additional cost. For devices with limited PHY capabilities, or if any included OOB support is otherwise busy with native transactions and unable to respond in time, failure of the report phase could lead to discarding the entire ranging round or block, thereby wasting a significant amount of power over time.

### BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified block diagram of a pair of devices communicating in a wireless medium each configured to supplement a control phase in ranging communications according to one embodiment.
FIG. 2 is a graphic timing diagram depicting a series of ranging cycles and further showing details of a current ranging cycle according to one embodiment which may be performed by the devices DEV A and DEV B of FIG. 1.
FIG. 3 is a graphic timing diagram depicting additional details of the report phase of FIG. 2.
FIG. 4 is a graphic timing diagram depicting additional details of the control phase of FIG. 2 including transmission of control packets implemented according to one embodiment.
FIG. 5 is a diagram of a POLL/RESP control packet illustrating the packet format of the POLL and RESP control packets of FIG. 4 according to one embodiment when the previous report phase was successful.
FIG. 6 is a diagram of a POLL/RESP control packet illustrating the packet format of the POLL and RESP control packets of FIG. 4 according to one embodiment when the previous report phase was not successful, either in whole or in part.
FIG. 7 is a flowchart diagram illustrating operation of the initiator device for constructing a POLL control packet for sending to the responder device during the control phase of the current cycle according to one embodiment.
FIG. 8 is a flowchart diagram illustrating operation of the responder device for constructing a RESP control packet for sending to the initiator device during the control phase of the current cycle according to one embodiment.
FIG. 9 is a simplified graphic timing diagram illustrating chip rate matching synchronization for NB and UWB frames according to one embodiment.
FIG. 10 is a simplified graphic timing diagram illustrating chip rate matching synchronization for NB and UWB frames according to one embodiment, in which the UWB radio is used to perform the entire cycle including control, ranging, and report portions.
FIG. 11 is a simplified graphic timing diagram illustrating a ranging packet transmitted by the UWB radio of the initiator or the responder according to three different synchronization patterns including two synchronization patterns implemented according to one embodiment for robust acquisition for UWB-driven MMS schemes.
FIG. 12 is a simplified graphic timing diagram illustrating an alternative robust acquisition method for UWB-driven MMS schemes according to another embodiment.

### DETAILED DESCRIPTION

A system and method of supplementing a control phase in ranging communications with report and assist portions as described herein overcomes failures during a report phase of an immediately prior ranging cycle. A wireless device performing the ranging communications is configured to incorporate non-correlative assist symbols in the payload of a control packet transmitted in the current ranging cycle. The wireless device may also be configured to detect a failure in the prior ranging cycle and to append a report indicating a relative time measurement of the immediately prior ranging cycle in the payload of the control packet. The report may be divided into report fragments interlaced with the assist symbols. In this manner, any previous failed report phase along with assist symbols added to the current control phase packets eliminates the dependence on other radios, saves power, and improves carrier frequency offset estimate (CFO) performance.

Chip rate matching for frame synchronization and robust acquisition for UWB-Driven ranging operations are also described herein. In a method of synchronizing ranging operations between two wireless devices communicating in sequential ranging cycles for performing ranging operations, the wireless devices operate at two different chip rates. The sequential cycles (or frames) are separated by a time offset which is a multiple of a smallest time duration in which the first and second chip rates align with each other.

In a method of performing ranging operations between the two wireless devices in which an ultra-wide band communication device is used for performing the control phase of at least one ranging cycle, multiple synchronization header (SHR) fragments are transmitted using the ultra-wide band communication device rather than a single SHR fragment. In one embodiment, additional SHR fragments are generated by converting at least one ranging sequence fragment (RSF) transmitted during the ranging phase into an SHR fragment by appending a start of frame delimiter to each RSF fragment. In another embodiment, one or more SHR fragments are transmitted before the ranging packet, such as by extending the ranging phase by a corresponding amount or by transmitting one or more SHR fragment in a time offset before the ranging phase. In either case, the chance of successfully receiving an SHR fragment is significantly increased to improve ranging communications.

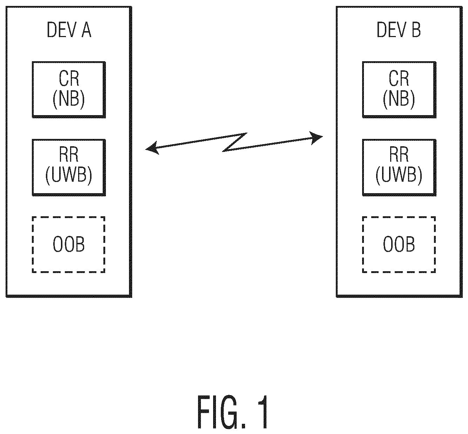

FIG. 1 is a simplified block diagram of a pair of devices communicating in a wireless medium each configured to supplement a control phase in ranging communications according to one embodiment. Although only two devices are shown, DEV A and DEV B, it is understood that any number of devices may be included in the wireless medium. Each of the devices are configured with a communication radio (CR) and a ranging radio (RR), but may also be equipped with an out-of-band (OOB) radio, such as low-energy Bluetooth (BLE), Wi-Fi, cellular (5G or similar), etc. Each of the devices are configured to operate according to the 802.15.4ab draft standard for performing NBA-UWB MMS (Narrowband-Assisted Multi-Millisecond Ultra-Wide Band) ranging applications or the like. The communication radio CR may be implemented using a communication technology suitable for exchanging information, such as a narrowband (NB) radio or the like according to the 15.4 standard, and the ranging radio RR may be implemented to facilitate precise ranging operations, such as an ultra-wide band (UWB) radio or the like.

A typical NBA-UWB MMS ranging cycle consist of 3 phases, including a control phase, a ranging phase, and a report phase. The control phase is typically performed using the NB radio (e.g., according to the 15.4 standard), the ranging phase is typically performed using the UWB radio, and the report phase may also be performed using the NB radio. The NBA-UWB MMS ranging description in the 802.15.4ab draft standard suggests that when there is a failure in the report phase during a ranging cycle, the cycle may be discarded and a different communication radio should be used during subsequent reporting phases, such as an OOB radio or the like (in which OOB includes BLE in this context). This proposal presents a challenge by requiring that the devices performing ranging operations include another radio and corresponding PHY support or represents a significant waste of power when an alternative communication radio is not provided or otherwise unavailable. Even when the devices are already equipped with an OOB radio, it may be busy with other tasks and may not always be available to supplement ranging operations.

The devices DEV A and DEV B, however, are configured according to a system and method of supplementing control phase in ranging communications with report and assist portions as described herein to provide an additional opportunity for exchanging report information during a control phase of the next ranging cycle thereby saving power and avoiding discarding an otherwise successful ranging operation. The devices DEV A and DEV B configured according to a system and method of supplementing control phase in ranging communications with report and assist portions as described herein also avoids any proposed requirement of an additional OOB radio including BLE radios and the like.

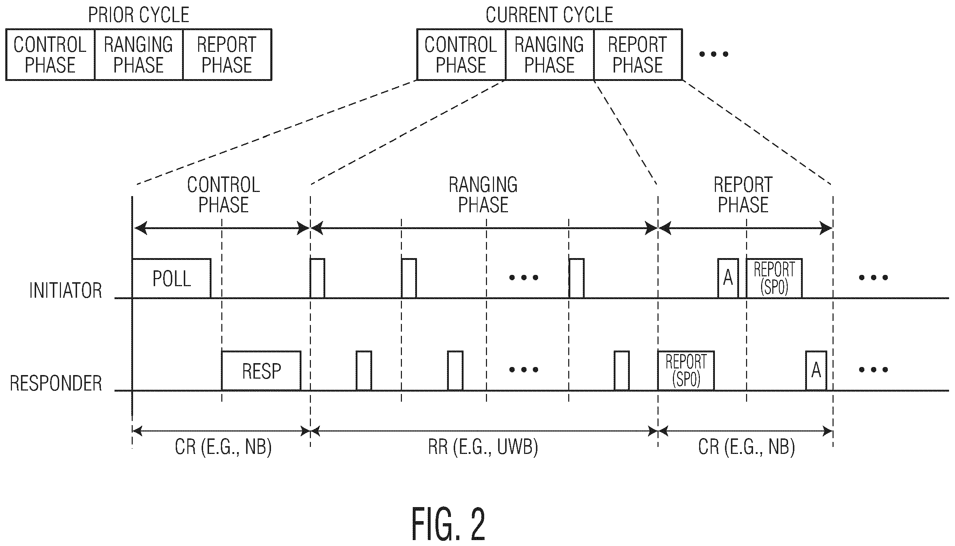

FIG. 2 is a graphic timing diagram depicting a series of ranging cycles and further showing details of a current ranging cycle according to one embodiment which may be performed by the devices DEV A and DEV B. Although not shown, there are also one-to-many ranging modes in which an initiator gets responses from multiple responses during one ranging cycle. Nonetheless, the communication principles described herein are substantially similar. As shown, the series of ranging cycles includes a prior cycle and a current cycle in which each cycle includes a control phase (or ranging control phase) which may be performed by the NB radio, a ranging phase which may be performed by the UWB radio, and a report phase which may also be performed by the NB radio. In each phase, one of the devices acts as an initiator and the other device acts a responder, although in some configurations, the roles may be reversed in subsequent cycles. In conventional configurations, the devices may exchange an initial synchronization (SYNC) preamble portion followed by an optional payload in the form of a PSDU (Physical layer Service Data Unit) or the like during the control phase. The SYNC packets or preambles are used for timing synchronization since each of the devices have independent timing sources.

The ranging phase, also known as the measurement phase, is typically performed by the UWB radios in which the radios operate at relatively low power, with bandwidth typically required to be minimum 500 MHz, for exchanging relatively short pulses facilitating precise time measurements for making precise distance measurements. Although the UWB pulses are transmitted at relatively low transmit power, a series of pulses are exchanged in which power is accumulated over time for making accurate distance measurements. Although the UWB radios may also be used for the control phase or even the report phase, UWB radios are not an optimal choice for either phase. NB radios or other communication radios typically operate at higher power and are more suitable for synchronization and transferring information.

The report phase may be performed by the NB radios or the like for exchanging report information to support distance measurement, such as incorporating measured time values including, for example, turnaround time and round-trip time. As shown, the responder sends a report to the initiator, which may be transmitted using a packet with a SYNC portion with one or more SYNC bits in which an AES-128 (Advanced Encryption Standard) scrambled timestamp or the like is added for security. Although not specially shown in the other phases, the devices may perform some form of flow control such as acknowledging successful reception of a communication from the other device. As shown, the initiator may send an acknowledgement packet (ACK or A) back to the responder to acknowledge successful reception of the report from the responder in the first slot of the report phase. In the second slot of the report phase, the initiator sends its report to the responder, which may be acknowledged (A) by the responder (if so configured).

When a successful ranging cycle is achieved, both devices make substantially equivalent time measurements as reflected in the exchanged reports. If the reports have discrepancies or indicate substantially unequal time measurements, such inequalities or discrepancies may be corrected during subsequent ranging cycles. In many situations, one or both devices may be moving so that the time measurements may be made and updated over time. In conventional configurations, the control and ranging phases may be successful, but the report phase may be impacted by coexistent interferers (not shown) causing failure in the form of a clear channel assessment (CCA) failure or packet errors or the like. In some examples where OOB radios are not available, the failed cycle was simply discarded including the lost reports.

In the illustrated embodiment, the conventional packets exchanged during the control phase in conventional configurations are replaced by improved POLL control packets and response (RESP) packets. In conventional configurations, when the control and ranging phases of the prior cycle are successful but the report phase failed, the prior cycle must be discarded in absence of OOB radios. As described further herein, the POLL control packet in the current cycle transmitted by the initiator to the responder, and the RESP control packet transmitted by the responder to the initiator, are configured to provide an additional opportunity to exchange the missing report information. The POLL control packet may be configured to incorporate the report generated by the initiator for sending to the responder, and the RESP control packet may also be configured to incorporate the report generated by the responder for sending to the initiator. In this manner, many otherwise unsuccessful ranging cycles with failed reporting phases may be recovered in the control phase of the following cycle.

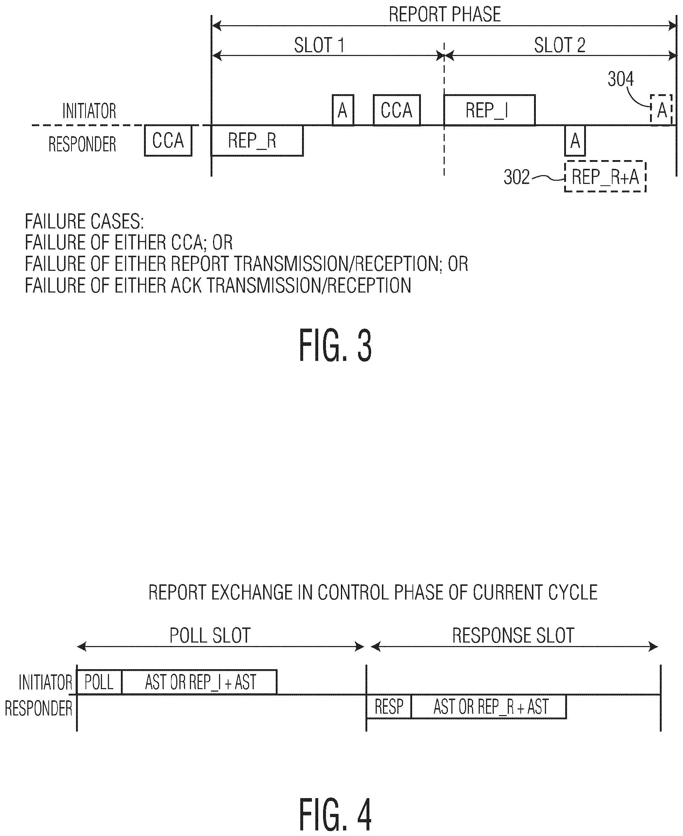

FIG. 3 is a graphic timing diagram depicting additional details of the report phase. Prior to entering the report phase, the responder device may perform a CCA (clear channel assessment) to ensure that the wireless medium is available for wireless communication. The report phase may include 2 slots. In the first slot, the responder device transmits its responder report REP_R, and if successfully received, the initiator device may transmit an acknowledge (A). Prior to the second slot, the initiator device may perform a CCA to ensure that the wireless medium is still available for wireless communication. If so, the initiator device transmits its initiator report REP_I, and if successfully received, the responder device may transmit an acknowledge (A). it is noted, however, that in NBA-MMS configurations, acknowledges are not used by default and if used and fast ACK is configured.

The report phase may fail for a variety of reasons. If the CCA by the responder device or the initiator device indicates that the wireless medium is not available, then the device is unable to send its report. This may occur in either one or both slots of the report phase. Even when the wireless medium is deemed to be clear, one or more packet errors may occur resulting in failure of transmission or reception of either report. Likewise, one or more packet errors may occur resulting in failure of transmission or reception of an acknowledgement. The draft standard does allow for some recovery mechanisms during the report phase. For example, if the responder device does not receive an acknowledgement from the initiator device during slot 1, the responder device may append its report to its acknowledgement as shown by the combined packet 302 (REP_AR + A) during slot 2. If successfully received by the initiator device and if it has time, the initiator device may respond with an acknowledgement 304. In general, however, the available recovery mechanisms are not failsafe so that either the initiator device or the responder device, or both, may not receive the report from the other device during the report phase.

FIG. 4 is a graphic timing diagram depicting additional details of the control phase including transmission of control packets implemented according to one embodiment. The control phase is subdivided into a poll (POLL) slot and a response (RESP) slot. During the poll slot, the initiator device transmits a POLL control packet with a payload, in which the payload includes a set of non-correlative assist symbols (AST) or includes its report REP_I generated during the previous ranging cycle along with the non-correlative assist symbols (REP_I + AST). Similarly, during the response slot, the responder device transmits a response (RESP) control packet with a payload, in which the payload includes a set of non-correlative assist symbols only (AST) or includes its report REP_R generated during the previous ranging cycle along with the non-correlative assist symbols (REP_R + AST).

When there is no failure of the report phase of the prior cycle, then the payload of the POLL and RESP control packets may include only the assist symbols (AST), which are configured in such a manner to ensure a smooth spectrum during transmission. In a conventional configuration, an all-zero sequence may be used in the payload of a PSDU, which resulted in undesired spikes in the power spectral density (PSD) of the transmit spectrum. Instead, non-correlative assist symbols or corresponding chip sequences are chosen with minimum correlation among them to improve the transmit spectrum. The assist symbols further facilitate adjustment of timing and frequency offset parameters used by the receiver during the subsequent ranging phase of the current cycle. The responder device may adjust its timing and frequency offset parameters from the assist symbols sent by the initiator device, in which the adjusted timing and frequency offset parameters may be used by the responder device's UWB radio during the ranging phase of the current cycle. Similarly, the initiator device may adjust its timing and frequency offset parameters from the assist symbols sent by the responder device, in which the adjusted timing and frequency offset parameters are used by the initiator device's UWB radio during the ranging phase of the current cycle.

When there is a failure of transmission of one or both reports in the report phase of the prior ranging cycle, then the POLL and RESP control packets provide another opportunity for the devices to exchange their reports so that the prior ranging cycle is not wasted. The initiator device may send its report from the last cycle to the responder device in the POLL control packet, and the responder device may send its report from the last cycle to the initiator in the RESP control packet. In addition, each report may be subdivided into fragments and interlaced with assist symbols as further described herein to facilitate timing adjustment during the ranging phase of the current cycle.

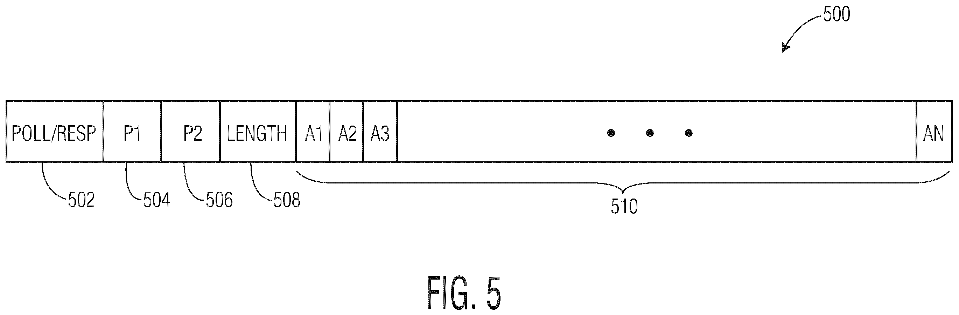

FIG. 5 is a diagram of a POLL/RESP control packet 500 illustrating the packet format of the POLL and RESP control packets according to one embodiment when the previous report phase was successful. The POLL/RESP control packet 500 includes a preamble field 502 which includes SYNC bits used by the receiving device for detecting, synchronizing timing, and receiving the packet. The POLL/RESP control packet 500 is a POLL control packet when transmitted by an initiator device and is a RESP control packet when transmitted by the responder device. The POLL/RESP control packet 500 includes a P1 field 504 for holding a P1 value, which includes at least one bit having a state indicating either an acknowledgement (ACK) of the reception of the last report payload from the other device or a request (REQ) for the last report payload. In this manner, the sending device uses the P1 value to inform the receiving device whether or not the report has been successfully received and if not, requests the receiving device to resend the report.

The POLL/RESP control packet 500 includes a P2 field 506 for holding a P2 value, which includes at least one bit having a state which defines the content of the payload of the packet. For the POLL/RESP control packet 500, the P2 value defines an assist (AST) payload in which only assist symbols are appended therein, or P2 = AST, since the report from the other device was successfully received. The POLL/RESP control packet 500 includes a LENGTH field 508 holding a LENGTH value which includes at a set of bits having a collective state representing the length of the payload. The remaining portion of the POLL/RESP control packet 500 is the payload 510 including a sequence of non-correlative assist symbols, shown as A1, A2, A3, ..., AN in the illustrated embodiment. The number N represents any suitable number of non-correlative assist symbols may be included in different embodiments.

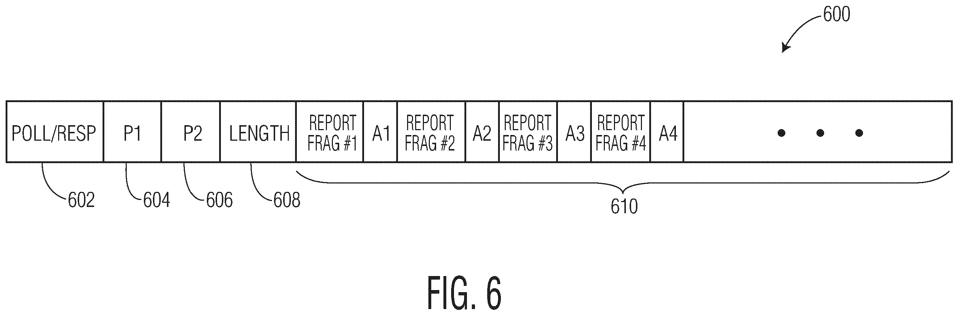

FIG. 6 is a diagram of a POLL/RESP control packet 600 illustrating the packet format of the POLL and RESP control packets according to one embodiment when the previous report phase was not successful, either in whole or in part. The POLL/RESP control packet 600 includes a preamble field 602 which also includes SYNC bits used by the receiving device for detecting, synchronizing timing, and receiving the packet in a similar manner as the preamble field 502. The POLL/RESP control packet 600 is a POLL control packet when transmitted by an initiator device and is a RESP control packet when transmitted by the responder device. The POLL/RESP control packet 600 includes a P1 field 604 holding a P1 value, which includes at least one bit having a state indicating either ACK or REQ in a similar manner as the P1 value of packet 500. Again, the sending device uses the P1 value to inform the receiving device whether or not the report has been successfully received and if not, requests the receiving device to resend a report.

The POLL/RESP control packet 600 includes a P2 field 606 holding a P2 value, which includes at least one bit having a state which defines the content of the payload of the packet. For the POLL/RESP control packet 600, the P2 value defines a report (REP) payload in which the sending device's report is appended therein interlaced with assist symbols. Thus, P2 = REP since the report from the other device may not have been successfully received. The POLL/RESP control packet 600 includes a LENGTH field 608 holding a LENGTH value which includes a set of bits having a collective state representing the length of the payload in a similar manner as the LENGTH value of the packet 500. The remaining portion of the POLL/RESP control packet 600 is the payload 610 including alternating report fragments interlaced with non-correlative assist symbols.

As shown, for example, the payload 610 includes a first report fragment (frag) #1, followed by a first assist symbol A1, followed by a second report frag #2, followed by a second assist symbol A2, followed by a third report frag #3, followed by a third assist symbol A3, followed by a fourth report frag #4, followed by a fourth assist symbol A4, and so on until the entire report is incorporated in fragments. The non-correlative sequence of the assist symbols of the POLL/RESP control packet 600 may be similar to that of the POLL/RESP control packet 500 except interlaced with report fragments as shown.

In one embodiment, assist symbols may be chosen from a field of a predetermined number of chip sequences (e.g., 16 entries) in a pseudo-random manner. In this case, there is a chip sequence to symbol mapping in which a predetermined number of chip sequences (e.g., 2 or 4 chips) are mapped to one assist symbol, in which each chip sequence is a binary sequence generated using a binary pseudo-random sequence. In another embodiment, a binary pseudo-random sequence generator is used to generate pseudo-random chip sequences to form pseudo-random assist symbols. In yet another embodiment, a set of a predetermined number of assist symbols (e.g., 16) may be predetermined (e.g., from chip sequences) in which one assist symbol is selected at a time in an incremental manner with wrap-around functionality from last back to first. In any of these cases, there is minimal correlation from one symbol to the next to improve or otherwise ensure a smooth spectrum of the transmitted signal while avoiding power spectral density (PSD) spikes. It is noted that a pseudo-random sequence generation key can be pre-shared using higher layer protocols. A benefit of using pseudo-random sequence generation using a pseudo-random sequence generation key is the ability to insert security feature because it is difficult for an attacker to predict the sequence so that the attacker may not be able to use the assist symbols for improving timing and frequency offset estimates.

In one embodiment, each of the assist symbols A1 - AN is a combination of 2 data symbols of known sequences of binary chip values, such as those defined in the NBA-UWB Technical Framework draft 0 section 2.3.1.1 in a chip sequence table. From a total of 16 data symbols, the assist symbols are formed from a combination of a pair of chip sequences from the table which are selected to construct a set of non-correlative assist symbols that have minimum correlation from one to the next. The non-correlative assist symbols may be used in incremental fashion in a rotational manner from first to last and back to first (wrap-around) and constructed so that they have minimum correlation among them. In another embodiment, the set of non-correlative assist symbols may be selected in a pseudo-random manner using a pseudo-random sequence generation key. The assist symbols are added to improve (Carrier Frequency Offset) correction capability, in which the assist symbols may be implemented with known chip sequences. As described herein, these assist symbols are transmitted regardless of report phase failure. In addition, the non-correlative assist symbols may be appended as mid-amble or post-amble without report payload fragments (packet 500) or with payload fragments (packet 600).

The use of the POLL/RESP control packets 500 and 600 in the control phase of the current cycle overcomes previous ranging cycle failure by providing the ability to send the report payload in the following control phase rather than deferring to an OOB radio or the like. In addition, the POLL/RESP control packets 500 and 600 introduce the concept of using known chip sequences as mid-ambles in case the report payload is sent in the control phase. The use of the POLL/RESP control packets 500 and 600 introduces the concept of using chip sequences as mid-amble or post-amble following POLL and RESP control packets even if there are no errors in the previous report phase. Rather than using long sequences of 0's which degrades the spectrum of the transmitted signal, non-correlative assist symbols improve the transmit spectrum while also providing carrier frequency offset (CFO) estimation capability. The PSD improvement enables higher transmit power, and the receiving device may extract CFO correction information for improving subsequent ranging phase operations.

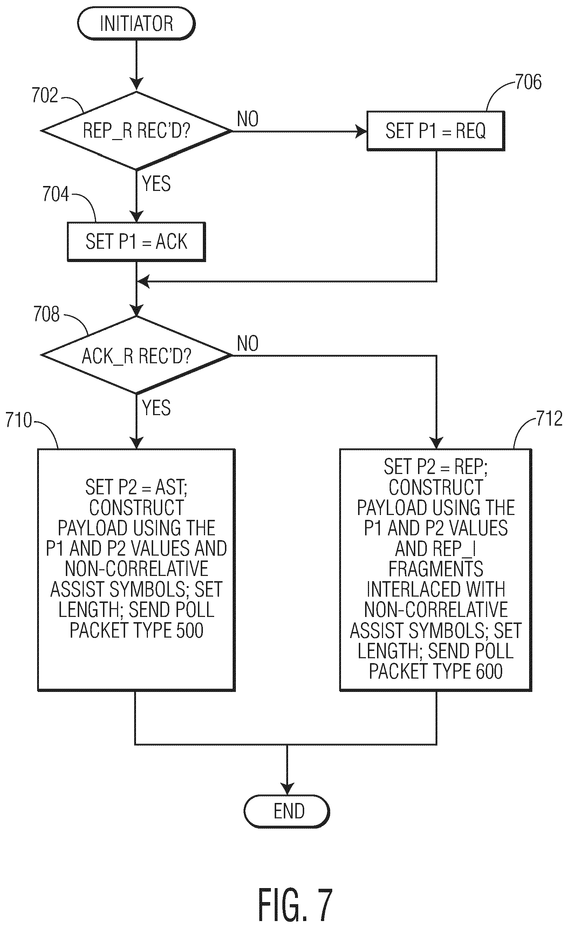

FIG. 7 is a flowchart diagram illustrating operation of the initiator device for constructing a POLL control packet for sending to the responder device during the control phase of the current cycle according to one embodiment. At block 702, it is queried whether a responder report REP_R has been successfully received from the responder device. If the responder report REP_R has been successfully received, operation advances to block 704 in which the P1 value is set equal to ACK for use in the POLL control packet to acknowledge successful receipt to the responder device. If the responder report REP_R has not been successfully received, operation advances instead to block 706 in which the P1 variable is set equal to REQ (P1 = REQ) so that the initiator device may request a report from the responder device in the POLL control packet.

From either blocks 704 or 706, operation advances to block 708 in which it is queried whether an acknowledge (ACK_R) has been received from the responder device indicating successful receipt of the report REP_I from the initiator device. If an acknowledge (ACK_R) has been received from the responder device indicating that it has successfully received the initiator device's report, then operation advances to block 710 in which initiator device constructs and sends a POLL control packet type 500. The P2 value is set equal to AST, the payload is constructed using the determined P1 and P2 values along with non-correlative assist symbols as previously described, the LENGTH value is set, and the constructed packet type 500 is sent by the initiator device to the responder device during the control phase, and operation is completed.

If an acknowledge (ACK_R) has not been received from the responder device indicating that it has successfully received the initiator device's report as determined at block 708, then operation advances instead to block 712 in which initiator device constructs and sends a POLL packet type 600. The P2 value is set equal to REP, the initiator's report REP_I is subdivided into fragments and the payload is constructed with REP_I fragments interlaced with non-correlative assist symbols as previously described, the LENGTH value is set, and the constructed packet type 600 is sent by the initiator device to the responder device during the control phase, and operation is completed.

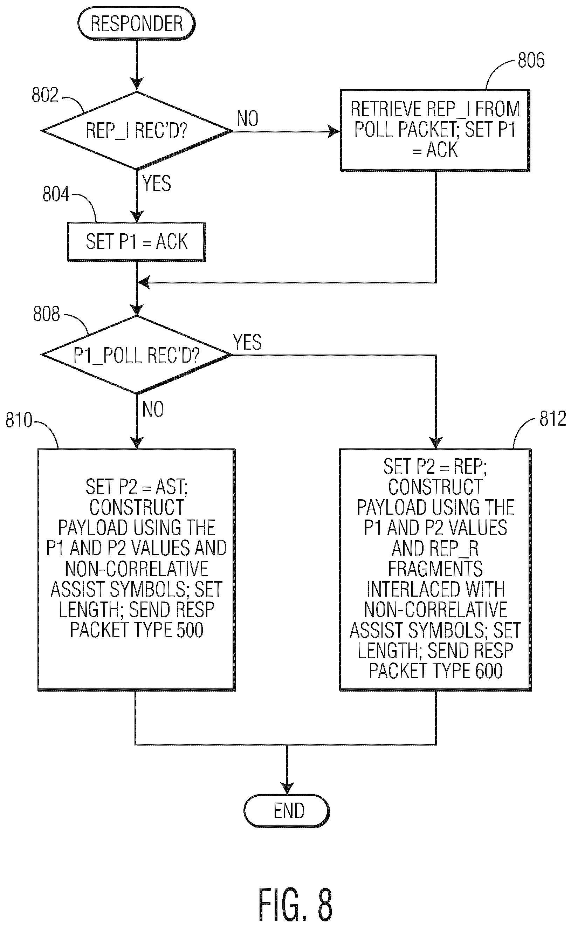

FIG. 8 is a flowchart diagram illustrating operation of the responder device for constructing a RESP control packet for sending to the initiator device during the control phase of the current cycle according to one embodiment. At block 802, it is queried whether an initiator report REP_I has been successfully received from the initiator device. If the initiator report REP_I has been successfully received, operation advances to block 804 in which the P1 value is set equal to ACK (P1 = ACK) to acknowledge successful receipt to the initiator device. If the initiator report REP_R has not been successfully received, operation advances instead to block 806 in which the initiator's report REP_I is retrieved from the POLL control packet sent by the initiator device during the control phase, and the P1 value is set equal to ACK, or P1 = ACK.

From either blocks 804 or 806, operation advances to block 808 in which it is queried whether the P1 value in the POLL control packet sent from the initiator device, or P1_POLL, is equal to REQ. If P1_POLL is not equal to REQ, then it is assumed that the initiator device has successfully received the responder's report REP_R, and operation advances to block 810 in which responder device constructs and sends a RESP control packet type 500. The P2 value is set equal to AST, the payload is constructed with non-correlative assist symbols as previously described, the LENGTH value is set, and the constructed RESP control packet type 500 is sent by the responder device to the initiator device during the control phase, and operation is completed.

If the P1_POLL value in the POLL control packet from the initiator device is equal to REQ as determined at block 808, then it is assumed that the initiator device has not successfully received the responder device's and operation advances instead to block 812 in which responder device constructs and sends a RESP control packet type 600. The P2 value is set equal to REP, the responder's report REP_R is subdivided into fragments and the payload is constructed with REP_R fragments interlaced with non-correlative assist symbols as previously described, the LENGTH value is set, and the constructed RESP control packet type 600 is sent by the responder device to the initiator device during the control phase, and operation is completed.

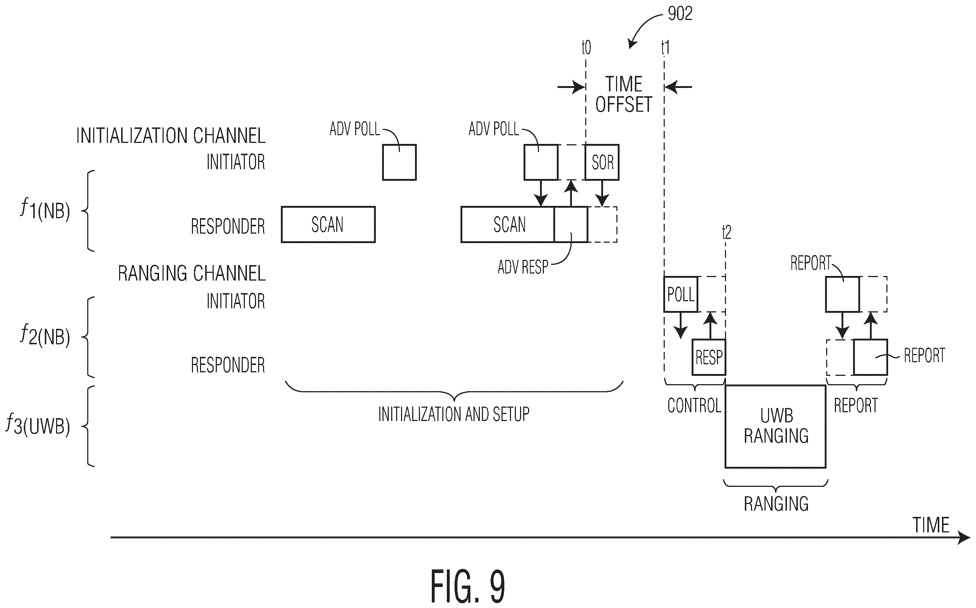

FIG. 9 is a simplified graphic timing diagram illustrating chip rate matching synchronization for NB and UWB frames according to one embodiment. As previously described herein, NBA-UWB MMS may use two separate radio technologies, NB and UWB. An important aspect of operation is transition from one radio type to another or from one frequency to another. The applicable draft standard has a parameter that sets a time offset for the transition. However, applicable draft standard leaves the time offset resolution undefined. The time offset can be set at 1/499.2 MHz rate, which is approximately 2 nanoseconds (ns).

As shown in FIG. 9, the NB radio may be used for initialization and within a first frequency channel f1(NB). As shown, the responder performs a scan transmission, followed by an advertising poll (ADV POLL) transmitted by the initiator, followed by another scan transmission by the responder, which is overlapped in time by another ADV POLL transmitted by the initiator, in which the second scan is immediately followed by an advertising response (ADV RESP) transmitted by the responder, which is immediately followed by a start of ranging (SOR) packet transmitted by the initiator. The details are defined in the standard and not further described. Nonetheless, a time offset 902 is defined from the beginning of the SOR packet on f1(NB) at a time t0 and the beginning of a POLL control packet transmitted by the NB radio at a time t1 within a second frequency channel f2(NB). The POLL control packet starts the control phase of a first ranging cycle. The time offset 902 also locks the position of a UWB fragment at the beginning of UWB ranging of the ranging phase performed by the UWB radio at a time t2 within a third frequency channel f3(UWB) due to its fixed or predetermined time difference relative to the POLL control packet. The NB and UWB radios, however, have different chip rates (2 MHz vs 499.2 MHz), so that an offset value dictated by the time offset 902 may require fractional timing adjustment.

The packet timing tolerance according to the standard is defined as 100 parts-per-million (ppm). For a slot size of 1 millisecond (ms), 100 ppm is 100 ns, and for a slot size of 2 ms, the packet timing tolerance is 200 ns. The NB chip rate is 2 MHz / 0.5 microseconds (µs) and the time offset parameter has 2 ns steps. For NB randomly picked slot timing could be up to 250 ns off, which would not meet the 100 ns or 200 ns tolerance requirement. When timing NB and UWB transmissions, the radios could share a common time reference. Given an NB chip rate of 2 MHz with a period of 0.5 µs and a UWB chip rate of 499.2 MHz with a period of about 2 ns, the smallest time duration for the different chip rates to match is 2.5 µs, determined as 5 x 1/2MHz or 1248 x 1/499.2MHz. Therefore, the time offset 902 should be a multiple of 2.5 µs in order to keep alignment without fractional steps in chip rate and avoid issues meeting the 100-ppm tolerance for packet timing. At 2.5 µs intervals, chip timing matches and makes transition from one counter to another simple and reciprocal.

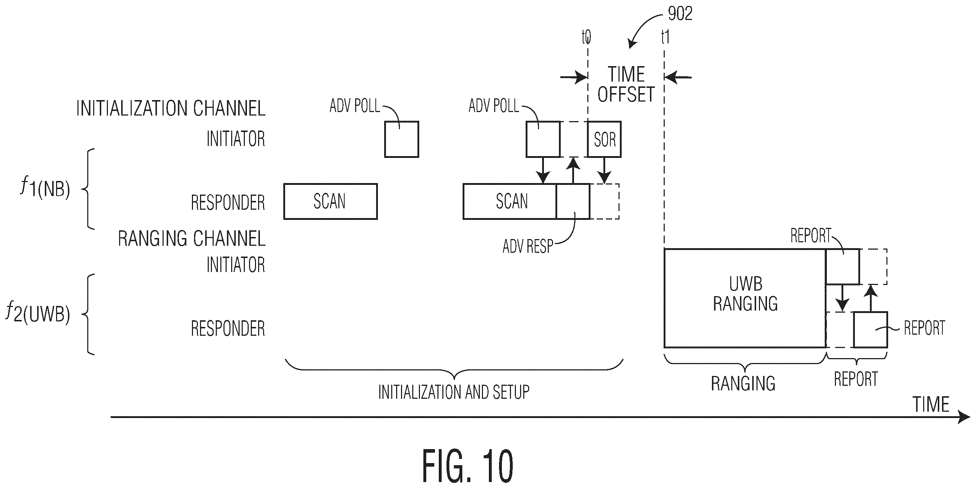

FIG. 10 is a simplified graphic timing diagram illustrating chip rate matching synchronization for NB and UWB frames according to one embodiment, in which the UWB radio is used to perform the entire cycle including control, ranging, and report portions. In one embodiment, although the control phase may be performed in a similar manner as shown in FIG. 9 except with the poll and response packets being replaced by UWB synchronization packets as further described herein. In a similar manner as that shown in shown in FIG. 9, the NB radio may be used for initialization and within a first frequency channel f1(NB). In this case, however, the UWB radio performs ranging and report phases within a second frequency channel f2(UWB), and UWB based synchronization is the first step in the ranging. In this case of UWB driven mode, the time offset 902 indicates transition between NB (beginning of SOR packet) at time t0 and UWB at the beginning of the first ranging cycle at time t1. Thus, the time offset 902 defines a time delay between the SOR packet on f1(NB) and UWB ranging packet on f2(UWB). The use of a common timing step, namely 2.5 µs, for both clock rates allows exact transmission timing.

As previously described, multi-millisecond ranging works in three steps, control which is also used for synchronization, ranging, and reporting. Synchronization can be performed by the NB radio or by the UWB radio, ranging is always performed by the UWB radio, and the report phase may be performed by UWB or by a communication radio. NB is the preferred mode for SYNC and reporting due to better link budget, but NB cannot always be used, such as, for example, if regulations prohibit it, or when NB interference with Wi-Fi is to be avoided. In these cases, SYNC can be done at the front end of the ranging packets transmitted by the UWB radio of the initiator and responder.

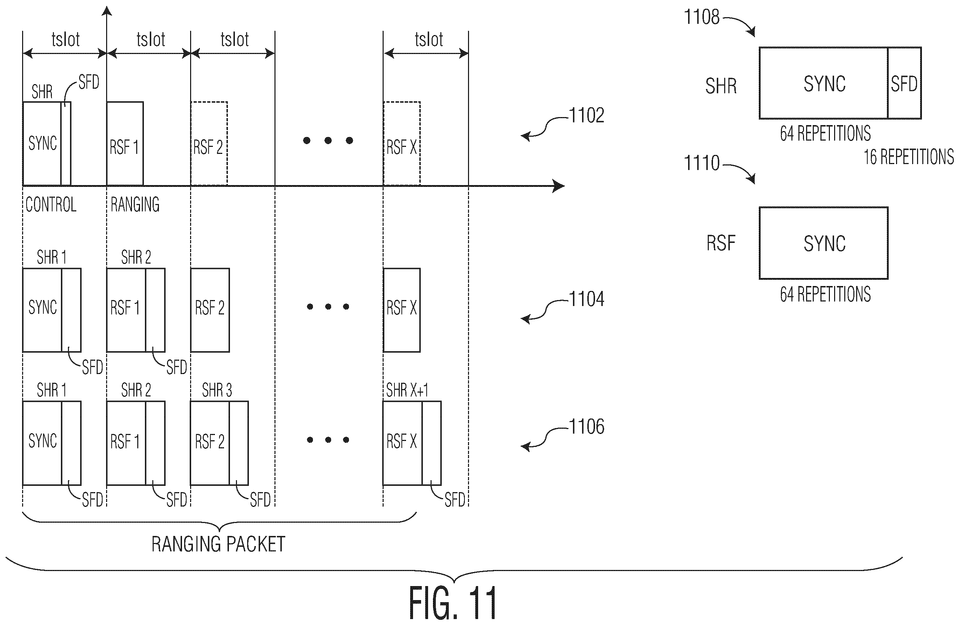

FIG. 11 is a simplified graphic timing diagram illustrating a ranging packet transmitted by the UWB radio of the initiator or the responder according to three different synchronization patterns including two synchronization patterns 1104 and 1106 implemented according to one embodiment for robust acquisition for UWB-driven MMS schemes such as shown in FIG. 10. Each ranging packet is subdivided into multiple segments or fragments within sequential time slots (tslots). In one embodiment, each time slot has a duration of a minimum of 1 millisecond (ms), such that tslot is at least 1ms, although alternative time slot durations are contemplated. A first synchronization pattern 1102 is according to a currently proposed solution in which one synchronization header (SHR) fragment is followed by a number (e.g., X) of ranging sequence fragment (RSF) fragments RSF 1, RSF2, ... RSF X, each within a respective one of the sequential time slots. As shown at 1108, the SHR fragment includes a SYNC portion comprising, for example, 64 code sequence repetitions followed by, for example, 16 code sequence repetitions of a start of frame delimiter (SFD), which provides an exact time reference for ranging and transmission of fragments. SYNC is used for acquisition and channel estimation. If the single SHR fragment is not captured by the receiving radio, the following X RSF fragments are lost. Such configuration renders the synchronization process vulnerable to errors or even failure.

As shown at 1110, each RSF fragment includes a SYNC portion comprising 64 code sequence repetitions, which is identical to the SYNC portion of the SHR fragment. In other words, the only difference between the SHR fragment and the RSF fragment is the appended SFD.

The synchronization pattern 1104 includes the first synchronization header (SHR) fragment followed by X RSF fragments RSF 1 - RSF X in a similar manner as first synchronization pattern 1102, each within a respective one of the sequential time slots, except that at least one of the RSF fragments is converted to an SHR fragment. In this case, an SFD is appended to the first RSF fragment RSF 1 to convert it to an SHR fragment, so that the ranging packet includes two SHR fragments SHR 1 and SHR 2 followed by X-1 RSF fragments RSF 2 - RSF X. In this manner, instead of only one SHR fragment, an SFD is appended to at least one of the RSF fragments after the first SHR fragment to improve synchronization. Although only RSF fragment is converted to and SHR fragment, it is understood that any number up to all of the RSF fragments may be converted in a similar manner.

The synchronization pattern 1106 illustrates the latter case in which all of the X RSF packets of the ranging packet are converted to SHR fragments resulting in X+1 SHR fragments. In this manner, instead of only one SHR fragment at the front of the ranging packet, one or more of the RSF packets are converted to SHR fragments simply by appending an SFD. In this manner, if the first SHR fragment is missed, one or more additional SHR fragments may be transmitted so that the receiving radio has a much higher chance of detecting one or more SHR fragments.

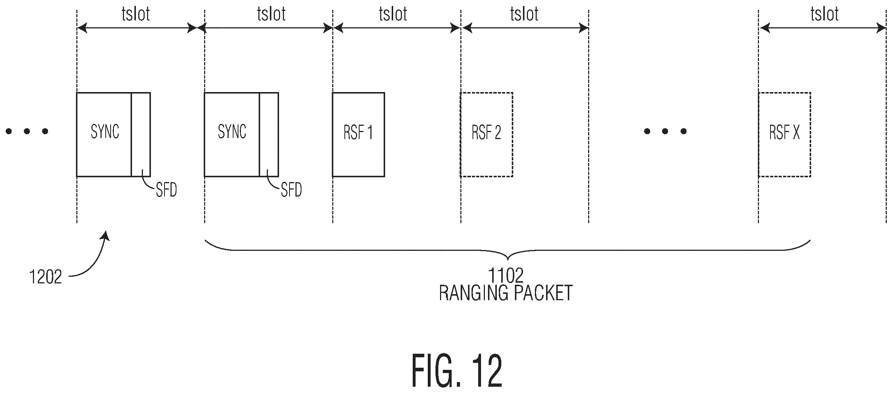

FIG. 12 is a simplified graphic timing diagram illustrating an alternative robust acquisition method for UWB-driven MMS schemes according to another embodiment. In this case, rather than changing one of more of the RSF fragments to SHR fragments of the ranging packet as shown in FIG. 11, one or more SHR fragments 1202 are transmitted before the synchronization pattern 1102 in corresponding one or more time slots. Although only one additional SHR fragment 1202 is shown, any suitable number of SHR fragments may be included within corresponding time slots depending upon the amount of time available. In one embodiment, an offset value may be defined within a control field or the like that increases the gap before the ranging phase, or duration of the ranging phase by an amount that allows one or more SHR fragments 1202 to be inserted before the synchronization pattern 1102. In an alternative embodiment, one or more SHR fragments 1202 may be transmitted within a time offset (e.g., time offset 902 or other offset between successive cycles) based on the duration of the offset. In this manner, one or more additional SHR fragments 1202 are transmitted effectively extending the ranging phase so that the receiving radio has a much higher chance of detecting at least one SHR fragment.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, variations of positive circuitry or negative circuitry may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A wireless device, comprising:
a ranging radio configured to perform ranging operations for determining a relative distance measurement during a ranging phase of each of successive ranging cycles; and
a communication radio configured to transmit a control packet with a payload during a control phase of a current ranging cycle, wherein the payload comprises:
a plurality of non-correlative assist symbols; and
when the report phase of the immediately prior ranging cycle is unsuccessful, a report indicating a relative time measurement of an immediately prior ranging cycle is combined with the plurality of non-correlative assist symbols.

2. The wireless device of claim 1, wherein when the report phase of the immediately prior ranging cycle is unsuccessful, the communication radio is configured to subdivide the report into a plurality of report fragments and to interlace the plurality of report fragments with the plurality of non-correlative assist symbols into the payload of the control packet.

3. The wireless device of claim 1 or 2, wherein the plurality of non-correlative assist symbols are selected in a pseudo-random manner using a pseudo-random sequence generation key.

4. The wireless device of any preceding claim, wherein each of the plurality of non-correlative assist symbols are selected from a predetermined set of different assist symbols.

5. The wireless device of any preceding claim, wherein each of the plurality of non-correlative assist symbols are selected to improve a spectrum of the control packet when transmitted.

6. The wireless device of any preceding claim, wherein the ranging radio and the communication radio collectively operate according to Narrowband-Assisted Multi-Millisecond Ultra-Wide Band technology and wherein each of the plurality of non-correlative assist symbols comprise a combination of data symbols of known sequences of binary chip values.

7. The wireless device of any preceding claim, wherein the ranging radio comprises an ultra-wide band, UWB, radio and wherein the communication radio comprises a narrowband, NB, radio.

8. The wireless device of any preceding claim 1, wherein the communication radio and the ranging radio are provided within an initiator device, wherein the initiator device is configured to:
incorporate a request for a responder report from a responder device by transmitting a poll control packet when the responder report was not successfully received from the responder device during the report phase of the immediately prior ranging cycle;
construct a payload of the poll control packet comprising only a plurality of non-correlative assist symbols when an acknowledgement was received from the responder device during the report phase of the immediately prior ranging cycle; and
construct a payload of the poll control packet comprising a plurality of report fragments of an initiator report interlaced with the plurality of non-correlative assist symbols when an acknowledgement was not received from the responder device during the report phase of the immediately prior ranging cycle.

9. The wireless device of any preceding claim 1, wherein the communication radio and the ranging radio are provided within a responder device, wherein the responder device is configured to:
retrieve an initiator report from a payload of a poll control packet transmitted by an initiator device during the control phase of the current ranging cycle when the initiator report was not successfully received by the responder device during the report phase of the immediately prior ranging cycle;
construct a payload of a response control packet comprising only a plurality of non-correlative assist symbols when the poll control packet includes an acknowledgement that a responder report was successfully received by the initiator device during the report phase of the immediately prior ranging cycle;
construct the payload of the response control packet comprising a plurality of report fragments of a responder report interlaced with the plurality of non-correlative assist symbols when the poll control packet includes a request for the responder report; and
transmit the response control packet in response to the poll control packet during the control phase of the current ranging cycle.

10. A method of supplementing a control phase in ranging communications performed by a wireless device which includes a ranging radio and a communication radio, the method comprising:
performing, by the ranging radio, ranging operations for determining a relative distance measurement during a ranging phase of each of successive ranging cycles;
generating a report indicating a relative time measurement of an immediately prior ranging cycle;
constructing a control packet with a payload, comprising:
when a report phase of the immediately prior ranging cycle is successful, including a plurality of non-correlative assist symbols in the payload;
when the report phase of the immediately prior ranging cycle is unsuccessful, including the report combined with the plurality of non-correlative assist symbols in the payload; and
transmitting, by the communication radio, the control packet during a control phase of a current ranging cycle.

11. The method of claim 10, further comprising:
subdividing the report into a plurality of report fragments; and
interlacing the plurality of report fragments with the plurality of non-correlative assist symbols into the payload of the control packet.

12. The method of claim 10 or 11, further comprising selecting the plurality of non-correlative assist symbols in a pseudo-random manner using a pseudo-random sequence generation key.

13. The method of any of claims 10 to 12, further comprising selecting the plurality of non-correlative assist symbols from a predetermined set of different assist symbols.

14. The method of any of claims 10 to 13, further comprising selecting the plurality of non-correlative assist symbols to improve a spectrum of the control packet when transmitted.

15. The method of any of claims 10 to 14, further comprising providing the ranging radio as an ultra-wide band, UWB, radio and providing the communication radio as a narrowband, NB, radio.
